(19) Europäisches Patentamt
European Patent Office
Office européen des brevets

(11) **EP 3 540 693 A1**

(12) # EUROPEAN PATENT APPLICATION

(43) Date of publication:
**18.09.2019 Bulletin 2019/38**

(51) Int Cl.:
***G06T 7/593*** *(2017.01)*

(21) Application number: **18192665.0**

(22) Date of filing: **05.09.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.03.2018 JP 2018044568**

(71) Applicants:
• **Kabushiki Kaisha Toshiba
Minato-ku,
Tokyo (JP)**

• **Toshiba Electronic Devices & Storage
Corporation
Tokyo, 105-0023 (JP)**

(72) Inventor: **SANO, Toru
Tokyo 105-0023 (JP)**

(74) Representative: **Hoffmann Eitle
Patent- und Rechtsanwälte PartmbB
Arabellastraße 30
81925 München (DE)**

(54) **OPTIMIZED DISPARITY CALCULATION**

(57) An image processing apparatus of an embodiment includes: a control circuit configured to set any one of an L image and an R image as a base image and another as a reference image, and to set an acquisition order of pixels in the reference image to a first direction; a cost optimization operation circuit configured to perform a cost optimization operation; a minimum-cost disparity extraction circuit configured to determine a disparity of each pixel; and a disparity output circuit configured to make a cross-check using a disparity between the L image and the R image, where the control circuit swaps the base image and the reference image, and simultaneously sets an acquisition order of pixels in the reference image after the swapping to a reverse direction of the first direction.

**FIG. 2**

EP 3 540 693 A1

Printed by Jouve, 75001 PARIS (FR)

**Description**

FIELD

An embodiment described herein relates generally to an image processing apparatus and an image processing method.

BACKGROUND

When a same subject is photographed by two cameras arranged horizontally, due to a difference between camera positions, a deviation occurs in a horizontal direction between positions of the subject in two photographed images. A difference between the positions of the subject in both images is called "disparity". A distance from a camera to a subject is proportional to a reciprocal of the disparity. That is, the disparity decreases as the subject is farther away, and increases as a subject is closer.

Conventionally, as an approach for calculating a disparity, block matching has been widely used. Block matching calculates a disparity by cutting out small areas (blocks) from respective images photographed by two cameras, and searching for a part where a similarity (a correlation value) of small areas is the largest between both images. More specifically, when an image photographed by one camera (e.g., a left image photographed by a camera arranged on a left side) is used as a base, a range in which a similarity is searched for in an image photographed by the other camera (e.g., a right image photographed by a camera arranged on a right side) is blocks in a range from a same coordinate as a coordinate of a base block in the left image to a coordinate apart toward the left side in the horizontal direction by a maximum disparity (e.g., 128 pixels).

The block matching is a simple process, and is basically able to calculate a disparity for each point independently, so fast calculation is possible. However, there is a problem that it is difficult to accurately calculate a disparity in an area with no texture, or in an area with repetitive patterns.

In recent years, a scheme (global matching) has been proposed for defining a cost function with respect to disparities of all pixels in an image, and obtaining a combination of disparities which minimize the function. Since global disparity estimation is performed in the global matching, a disparity can be more accurately calculated even in an area with no texture or in an area with repetitive patterns.

However, in the global matching, after a correlation value is calculated for each pixel using an approach similar to the block matching, calculation results of adjacent pixels are used to optimize its own calculation result. Then, for pixels on a whole screen, calculation results for which an optimization operation is performed are aggregated to calculate disparities. That is, there is a problem that while accuracy improves compared to the block matching, an operation amount and a memory amount for temporarily holding calculation results become huge.

Furthermore, when the left and right images are swapped to calculate disparities with the right image as a base image, and differences from disparities calculated with the left image as the base image are checked to check for each pixel whether a disparity has been calculated correctly or not (hereinafter called a cross-check), there is a problem that an operation amount and a memory amount for temporarily holding calculation results become huger because the global matching has to be performed twice.

BRIEF DESCRIPTION OF THE DRAWINGS

Fig. 1 is a schematic block diagram showing an example of a configuration of an image processing system including an image processing apparatus 1 according to the embodiment;
Fig. 2 is a block diagram showing an example of a configuration of a distance information operation circuit 11;
Fig. 3 is a block diagram showing an example of a detailed configuration of a disparity-based cost value calculation circuit 15;
Fig. 4 is a flowchart for explaining an example of a cost value calculation procedure in the disparity-based cost value calculation circuit 15;
Figs. 5A and 5B are diagrams for explaining a relationship between routes for calculating costs and a scanning direction in an SGM method;
Fig. 6 is a block diagram showing an example of a detailed configuration of a cost optimization operation circuit 16;
Fig. 7 is a diagram for explaining a method for making a cross-check of disparities in a disparity output circuit 19;
Fig. 8 is a flowchart for explaining an example of an image processing procedure according to the embodiment;
Fig. 9 is a flowchart for explaining an example of an image processing procedure of a comparison example;
Fig. 10 is a diagram showing an example of a moving object 100 according to the embodiment;

Fig. 11 is a block diagram showing an example of a configuration of the moving object 100; and
Fig. 12 is a block diagram showing an example of the image processing apparatus 1 mounted on the moving object 100.

DETAILED DESCRIPTION

An image processing apparatus of the embodiment is an image processing apparatus for calculating a disparity based on a first image obtained by first image pickup means picking up an image of a subject, and a second image obtained by second image pickup means positioned differently from the first image pickup means picking up an image of the subject, the image processing apparatus including a control circuit configured to set any one of the first image and the second image as a base image and another as a reference image, and to set an acquisition order of pixels in the reference image to a first direction. The image processing apparatus further includes: a cost optimization operation circuit configured to perform a cost optimization operation based on global optimization using a calculable route while pixels are acquired in the acquisition order set by the control circuit in the reference image; a minimum-cost disparity extraction circuit configured to determine a disparity of each pixel using a cost value obtained by the cost optimization operation; and a disparity output circuit configured to make a cross-check using a first disparity calculated with the first image as the base image, and a second disparity calculated with the second image as the base image to determine and output validity of the calculated disparities for each pixel. Furthermore, the control circuit swaps the base image and the reference image, and simultaneously sets a second direction being an acquisition order of pixels in the reference image after the swapping to a reverse direction of the first direction.

An embodiment will be described below with reference to the drawings.

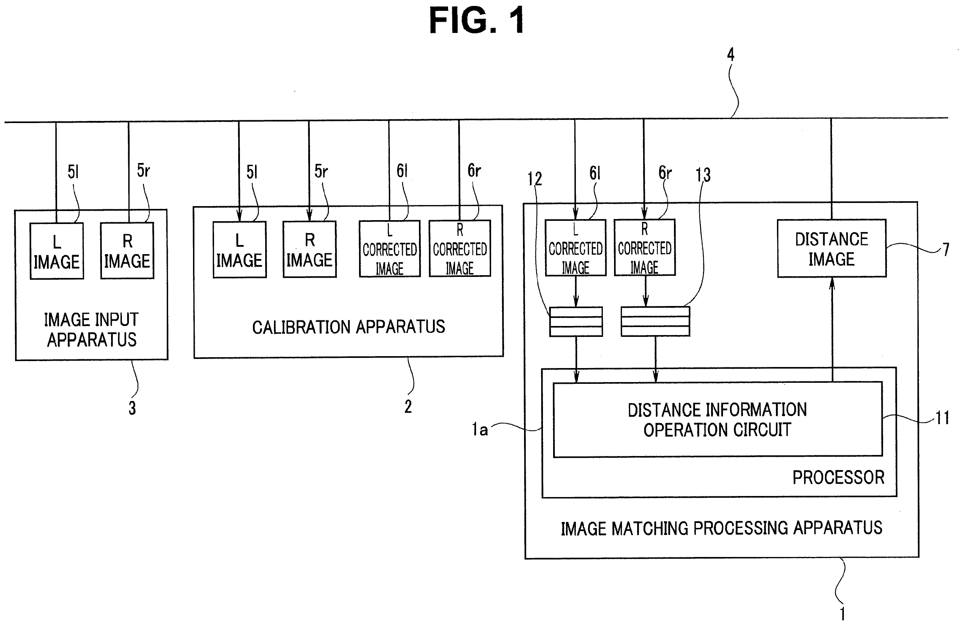

Fig. 1 is a schematic block diagram showing an example of a configuration of an image processing system including an image processing apparatus 1 according to the embodiment. The image processing system is composed of an image matching processing apparatus (hereinafter called an image processing apparatus) 1, a calibration apparatus 2, an image input apparatus 3, and a bus 4 for connecting the apparatuses. Fig. 1 illustrates an image processing system which performs a stereo matching process using a left-right disparity image based on two cameras.

A plurality of images picked up by cameras not shown (e.g., two images: an L image 51 picked up by a camera corresponding to a left eye, and an R image 5r picked up by a camera corresponding to a right eye) are inputted to the image input apparatus 3. The L image 51 and the R image 5r are inputted to the calibration apparatus 2 via the bus 4.

The calibration apparatus 2 corrects static deviations inside and outside a camera due to setting conditions, individual differences of a lens, or the like. More specifically, using an image obtained by picking up a specific graphic pattern with a known size such as a lattice-like pattern, an internal parameter and an external parameter are calculated in advance. Then, by converting each of the L image 51 and the R image 5r inputted from the image input apparatus 3 using the internal parameter and the external parameter, a static deviation is corrected to generate a corrected L image 61 and a corrected R image 6r. Note that the internal parameter represents internal properties of a camera such as a focal distance, an image principal point position, and lens distortion. The external parameter is a parameter of a rotational/translational movement in a three-dimensional space of a camera, and in a stereo image, represents a degree of a rotational/translational movement of one image when the other image is used as a base. The corrected L image 61 and the corrected R image 6r are inputted to the image processing apparatus 1 via the bus 4.

The image processing apparatus 1 performs stereo matching using the corrected images (the corrected L image 61 and the corrected R image 6r) to generate a distance image (an image representing distances from a camera to subjects) 7. The image processing apparatus 1 in Fig. 1 has a processor 1a, an L image line buffer (hereinafter called an L line buffer) 12, and an R image line buffer (hereinafter called an R line buffer) 13.

The L line buffer 12 is a buffer configured to store pixel data for a plurality of lines including a line at a disparity calculation target pixel position in the corrected L image 61. The R line buffer 13 is a buffer configured to store pixel data for a plurality of lines including a line at a disparity calculation target pixel position in the corrected R image 6r.

The processor 1a includes a distance information operation circuit 11. The distance information operation circuit 11 uses the global matching such as a graph cut method and an SGM method (semi-global matching method) to calculate disparities for respective pixels in the base image, and outputs the disparities as a disparity image. A cross-check is also made by swapping left and right of the base image. That is, each process in the distance information operation circuit 11 is executed by the processor 1a.

Note that the word "processor" used in the embodiment means, for example, a circuit of a CPU (central processing unit), a GPU (graphical processing unit), an application specific integrated circuit (ASIC), and a programmable logic device (e.g., a simple programmable logic device (SPLD), a complex programmable logic device (CPLD), and a field programmable gate array (FPGA)).

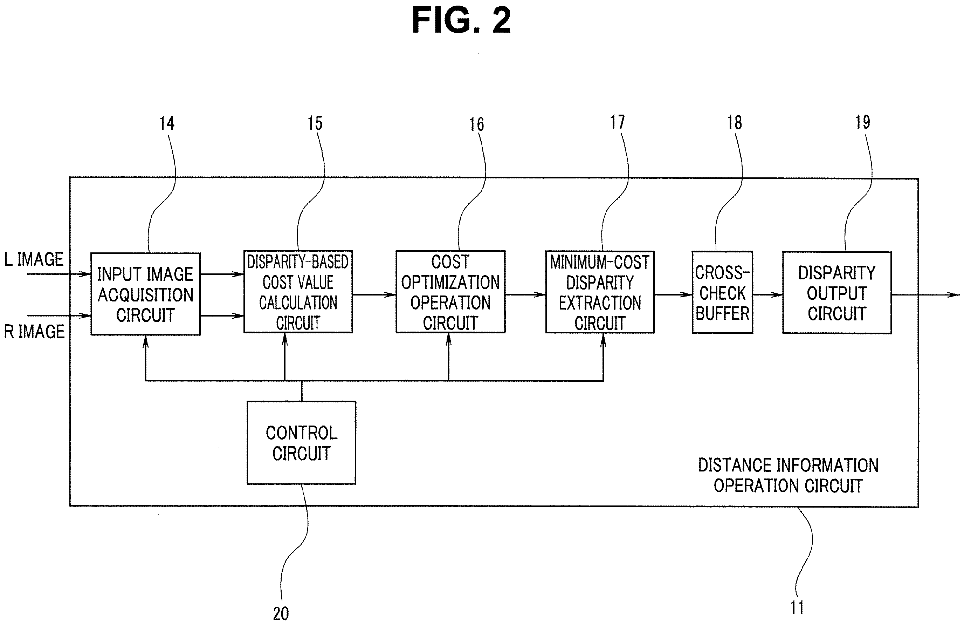

Fig. 2 is a block diagram showing an example of a configuration of the distance information operation circuit 11. The distance information operation circuit 11 has an input image acquisition circuit 14, a disparity-based cost value calculation circuit 15, a cost optimization operation circuit 16, a minimum-cost disparity extraction circuit 17, a cross-check buffer 18, a disparity output circuit 19, and a control circuit 20.

The input image acquisition circuit 14 acquires each pixel of the base image and each pixel of a reference image from the L line buffer 12 and the R line buffer 13 according to an instruction from the control circuit 20. In acquiring each pixel, which of the L image and the R image is the base image, and an acquisition order of pixels in each image (a direction of raster scanning) are instructed from the control circuit 20.

The disparity-based cost value calculation circuit 15 sets a cost value calculation pixel area at a disparity calculation target pixel in the reference image, and calculates cost values in the area. The cost value calculation pixel area has a size of a maximum disparity in the horizontal direction. In the description below, a coordinate representing a pixel position in the horizontal direction in an input image is to be an X coordinate, and a coordinate representing a pixel position in a vertical direction is to be a Y coordinate. For example, when the base image is the L image, a position of the disparity calculation target pixel is (X, Y)=(150, 25), and a maximum disparity in the horizontal direction is 128 pixels, the cost value calculation pixel area is pixels in a range of (X, Y)=(150, 25)-(23, 25).

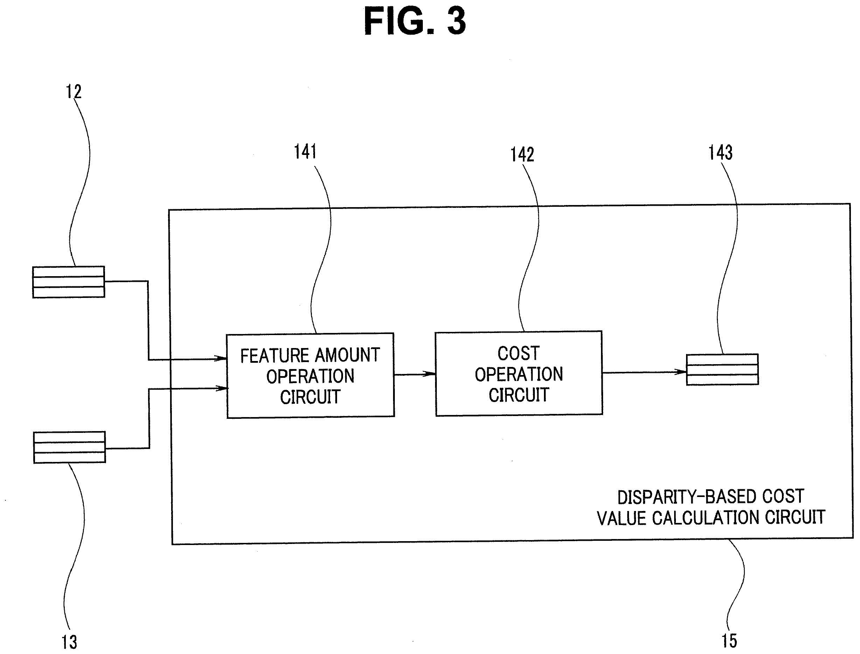

Fig. 3 is a block diagram showing an example of a detailed configuration of the disparity-based cost value calculation circuit 15. The disparity-based cost value calculation circuit 15 has a feature amount operation circuit 141, a cost operation circuit 142, and a cost buffer 143.

The feature amount operation circuit 141 calculates feature amounts of pixel data of the disparity calculation target pixel acquired from a line buffer storing the base image, and of pixel data in the cost value calculation pixel area acquired from a line buffer storing the reference image, respectively. An existing quantified feature amount is calculated such as an LBP (local binary pattern). When the LBP is calculated as a feature amount, luminance values of a feature amount calculation target pixel (center pixel) and a peripheral pixel are compared with each other. When the luminance value of the peripheral pixel is greater than the luminance value of the center pixel of the peripheral pixel, a bit "1" is given, and when the luminance value of the peripheral pixel is smaller than the luminance value of the center pixel, a bit "0" is given. Then, bits of peripheral pixels are combined in a predetermined order to be used as a feature amount (LBP code) of the feature amount calculation target pixel. Note that a bit given to the peripheral pixel may be "0" when the luminance value of the peripheral pixel is greater than the luminance value of the center pixel, and be "1" when the luminance value of the peripheral pixel is smaller than the luminance value of the center pixel.

The cost operation circuit 142 compares a feature amount related to the disparity calculation target pixel in the base image with a feature amount related to each pixel in the cost value calculation pixel area in the reference image to calculate a cost value for each disparity. For example, when an LBP code is calculated as a feature amount, a hamming distance between LBP codes of the base image and the reference image is calculated, and is defined as a cost value.

The cost buffer 143 stores a cost value calculated at the cost operation circuit 142 in association with a pixel position in the reference image.

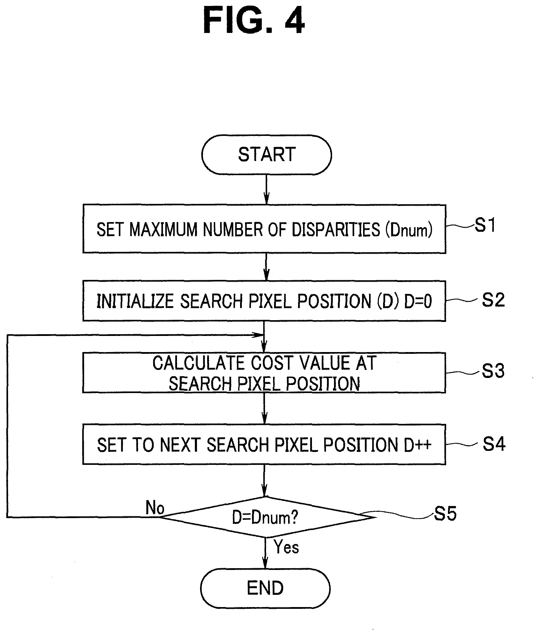

Fig. 4 is a flowchart for explaining an example of a cost value calculation procedure in the disparity-based cost value calculation circuit 15. Note that prior to cost value calculation, it is assumed that the disparity calculation target pixel has been set in the base image, and feature amounts necessary for the cost value calculation have been calculated. In order to create the distance image 7, disparities need to be calculated for all pixels of the base image. Normally, the disparity calculation target pixel position is sequentially set in an order of raster scanning from a pixel positioned in upper left of the base image to a pixel positioned in lower right, and a disparity at each pixel position is calculated.

First, a cost value calculation target area is specified, and a maximum number of disparities Dnum in the horizontal direction is set (S1). For example, in the example described above, Dnum=128 is set. A first cost value calculation target pixel position (search pixel position) is set. The first cost value calculation target pixel position is a pixel positioned at a left end portion of the cost value calculation target area. For example, in the example described above, the first cost value calculation target pixel position is set as (X, Y)=(23, 25).

Next, the pixel position in the horizontal direction for which a cost is to be calculated is set to an initial state (D=0) (S2). Subsequently, in the cost operation circuit 142, a cost value at the search pixel position is calculated, and is stored in the cost buffer 143 (S3). Subsequently, the pixel position (D) in the horizontal direction of the search pixel position is incremented by 1 to move the search pixel position to an adjacent pixel (S4).

When the search pixel position is included in the cost value calculation target area (S5, No), by returning to S3, a cost value at the pixel position is calculated. When the search target pixel position after the movement is not included in the cost value calculation target area (S5, Yes), it is determined that cost value calculation has been completed for all pixels in the cost value calculation target area, and a series of cost value calculation procedure in the disparity-based cost value calculation circuit 15 is ended.

Note that the method for calculating cost values in the disparity-based cost value calculation circuit 15 is not limited to the procedure of the flowchart in Fig. 4 as described above, and may be any procedure as long as cost values for all pixels in the cost value calculation target area can be calculated without omission. For example, the cost value calculation target area may be divided into a plurality of blocks to parallelly process cost value calculation in respective blocks.

Note that the method for calculating cost values in the disparity-based cost value calculation circuit 15 is not limited to the hamming distance between LBP codes as described above, and may use an existing quantified cost function such as an SAD function. When a method is used in which a cost can be calculated directly from pixel data without calculating a feature amount such as the SAD function, pixel data of the disparity calculation target pixel obtained from a line buffer storing the base image, and pixel data in the cost value calculation pixel area obtained from a line buffer storing the reference image can be directly inputted to the cost operation circuit 142 to calculate cost values, so the feature amount operation circuit 141 can be omitted.

The cost optimization operation circuit 16 calculates a combined cost value S being a combined non-similarity using the global matching such as the graph cut method, the SGM method (semi-global matching method), or the like to introduce a disparity optimized for each pixel in the base image.

Here, a method for calculating a combined cost value S based on the SGM method will be described. A combined cost value S is calculated by defining a plurality of routes along directions concentrating from edge portions of the reference image to the disparity calculation target pixel, and summing costs on the respective routes. As routes for calculating costs, four routes are normally set along four directions concentrating at the disparity calculation target pixel from a horizontal right direction, a horizontal left direction, a vertical upper direction, and a vertical lower direction. Then, normally, in addition to the four directions, four routes are added along four directions concentrating at the disparity calculation target pixel from an upper-right 45-degrees direction, a lower-right 45-degrees direction, a lower-left 45-degrees direction, and an upper-left 45-degrees direction, so that eight routes are set. Note that the number of routes is not limited to a specific number, for example, by further dividing the eight directions into 16 directions, or dividing each into three directions to obtain 24 directions.

A cost Lr(p, d) on each route r is calculated using the following equation (1).

$$Lr(p, d) = C(p, d) + \min\{Lr(p\text{-}r, d), Lr(p\text{-}r, d\text{-}1) + P1, Lr(p\text{-}r, d\text{+}1) + P1,$$

$$Lrmin(p\text{-}r) + P2\} \ ... \ \text{Equation (1)}$$

In the equation (1), C(p, d) denotes a cost value of a pixel positioned apart from the disparity calculation target pixel position by a disparity of d, min{} denotes a function to calculate a minimum, and Lrmin(p-r) denotes a minimum of Lr(p-r, d) in varying a shift amount d at a coordinate shifted from the disparity calculation target pixel position by one pixel in the r direction. P1 and P2 are preset penalty constants. Thus, since the cost Lr(p, d) is a recurrence formula in which a cost value at a pixel preceding by one pixel on a predetermined route in the r direction is selected and added to the cost value C(P, d), optimization is performed.

By performing the cost calculation shown in the equation (1) from a plurality of directions (e.g., eight directions), overall optimization is performed approximately. That is, a combined cost value S is calculated as a sum of costs Lr(p, d) in respective directions.

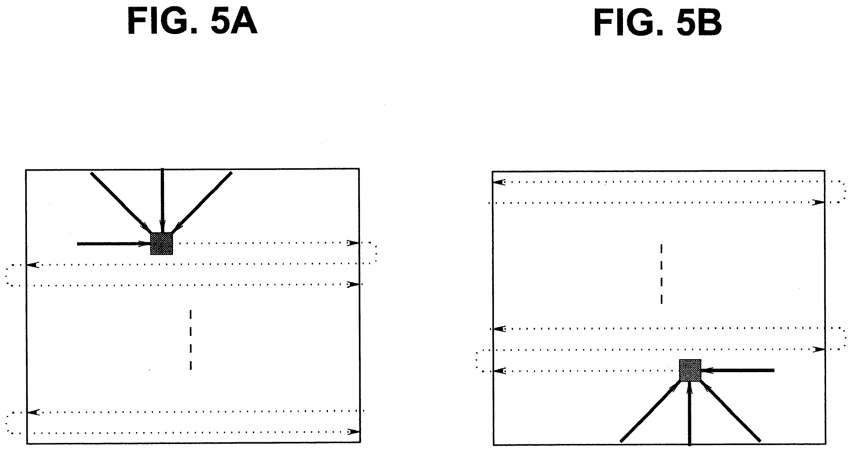

Figs. 5A and 5B are diagrams for explaining a relationship between routes for calculating costs and a scanning direction in the SGM method. In Figs. 5A and 5B, a pixel shown by shading indicates a current cost value calculation target pixel. In Figs. 5A and 5B, an arrowed bold line indicates a route and a direction for calculating a cost. Furthermore, in Figs. 5A and 5B, an arrowed dotted line indicates a scanning direction of pixels in the reference image.

Costs of four routes along four directions concentrating from a horizontal left direction, a vertical upper direction, an upper-right 45-degrees direction, and an upper-left 45-degrees direction need to be calculated with reference to results of pixels positioned in left and upper directions. Accordingly, as shown in Fig. 5A, the calculation is performed while raster scanning is performed from a pixel positioned in upper left of the reference image to a pixel positioned in lower right.

Costs of four routes along vectors in four directions concentrating from a horizontal right direction, a vertical lower direction, a lower-right 45-degrees direction, and a lower-left 45-degrees direction need to be calculated with reference to results of pixels positioned in right and lower directions. Accordingly, as shown in Fig. 5B, the calculation is performed while raster scanning is performed from a pixel positioned in lower right of the reference image to a pixel positioned in upper left.

That is, when cost calculation is performed from eight directions, raster scanning needs to be performed twice by changing the direction. Since raster scanning is performed twice, at first, costs in the four directions calculated during the first raster scanning are temporarily stored in a storage apparatus or the like. Then, after completion of the second raster scanning, the stored costs in the four directions are read out from the storage apparatus or the like, and are combined with the costs in the four directions calculated by the second raster scanning to obtain a combined cost value S.

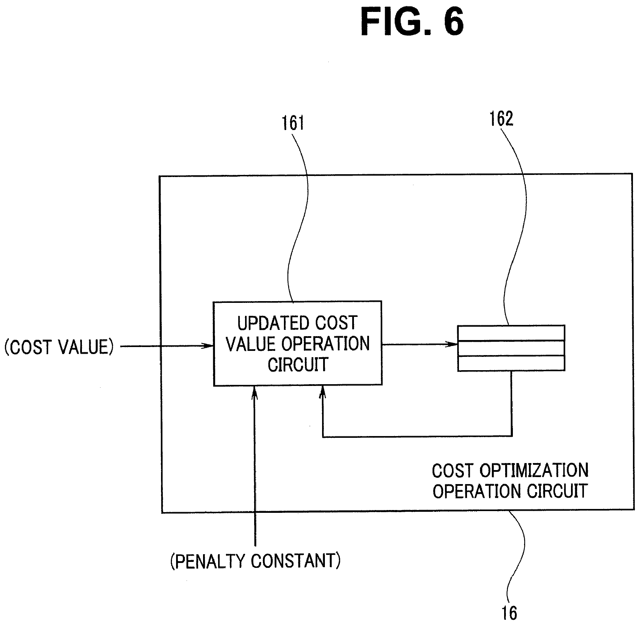

Fig. 6 is a block diagram showing an example of a detailed configuration of the cost optimization operation circuit 16. The cost optimization operation circuit 16 has an updated cost value operation circuit 161, and a cost buffer 162. The updated cost value operation circuit 161 uses a cost value inputted from the disparity-based cost value calculation circuit 15, the predetermined penalty constants PI, P2 inputted from a storage circuit not shown, and costs of adjacent pixels stored in the cost buffer 162 to perform the operation of the equation (1) as described above to calculate a cost. The operation result is stored in the cost buffer 162, and recursively used for cost calculation at the updated cost value operation circuit 161.

Note that the cost optimization operation circuit 16 is generally used for cost calculation on one specific route. Accordingly, cost optimization operation circuits 16 as many as routes set to calculate a combined cost value S are installed in the distance information operation circuit 11.

The method for calculating a combined cost value S at the cost optimization operation circuit 16 is not limited to the global matching such as the graph cut method or the SGM method as described above, and other existing approaches may be used.

The minimum-cost disparity extraction circuit 17 extracts a disparity which minimizes a combined cost value S calculated at the cost optimization operation circuit 16. A disparity is extracted for all pixels of the base image.

When a cross-check is made by swapping the left and right of the base image, the cross-check buffer 18 stores a disparity extracted at the minimum-cost disparity extraction circuit 17 for each pixel in an image set as the base image first.

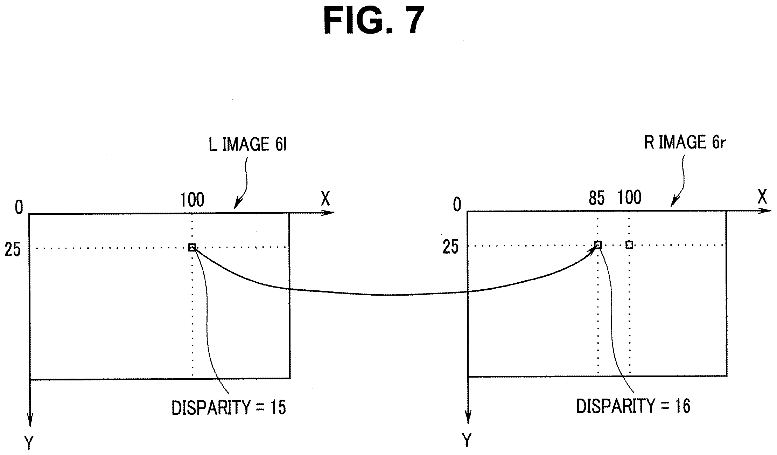

The disparity output circuit 19 checks a difference between a disparity of each pixel stored in the cross-check buffer 18 and a disparity of each pixel in an image set as the base image later to check for each pixel whether a disparity has been calculated correctly or not. Fig. 7 is a diagram for explaining a method for making a cross-check of disparities in the disparity output circuit 19. More specifically, for each pixel of the L image, a calculated disparity is subtracted from its own X coordinate to calculate a corresponding pixel position in the R image. For example, when a disparity of a pixel (X, Y)=(100, 25) in the L image is calculated as 15, 15 is subtracted from 100 to obtain a corresponding pixel (X, Y)=(85, 25) in the R image. Next, a disparity at the calculated pixel position in the R image is read out from the cross-check buffer 18, and a difference from the disparity at the pixel in the L image as described before is calculated. For example, when the disparity of the pixel (X, Y)=(85, 25) in the R image is 16, the difference is 15 - 16 = -1. An absolute value of the calculated difference is compared with a preset threshold, and when the absolute value is smaller than the threshold, it is determined that a disparity has been calculated correctly.

Note that the method for making a cross-check at the disparity output circuit 19 has only to compare a disparity in using the L image as the base image with a disparity in using the R image as the base image to determine whether a disparity has been calculated correctly or not, and therefore is not limited to the above-described method. For example, as a method (formula) of subtracting a disparity from each coordinate, or correctness/incorrectness determination based on comparison with a threshold, other methods may be used.

The disparity output circuit 19 outputs a disparity and a check result. Note that the disparity and the check result may be outputted independently, and for a pixel for which a disparity has not been calculated correctly, for example, by replacing the calculated disparity with a specific value (e.g., -1), the check result may be included in the disparity for output. Note that when a cross-check is not made, a disparity extracted at the minimum-cost disparity extraction circuit 17 is outputted as it is.

Furthermore, the disparity output circuit 19 controls an output order and calculates addresses so that disparities are outputted in a raster scanning order from a pixel in upper left of an image to a pixel in lower right.

The control circuit 20 sets the base image and instructs a scanning direction of pixels in each image for each circuit of the input image acquisition circuit 14, the disparity-based cost value calculation circuit 15, the cost optimization operation circuit 16, and the minimum-cost disparity extraction circuit 17.

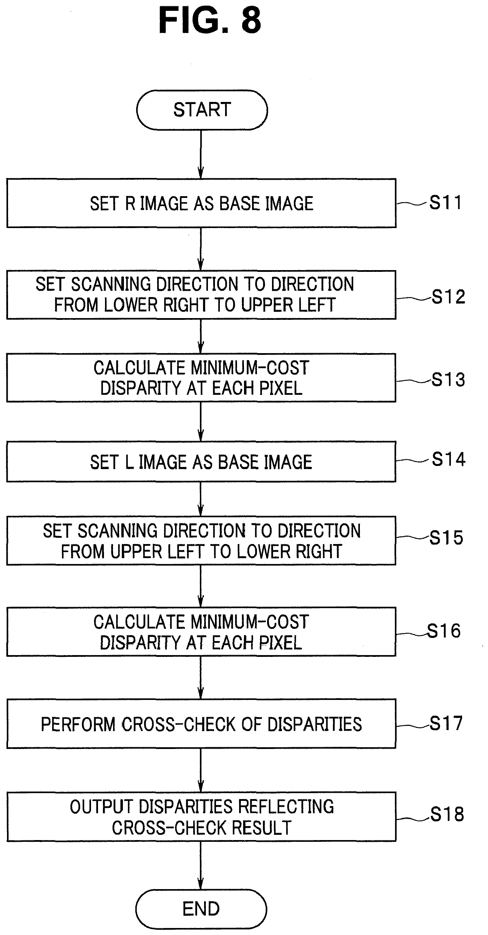

Next, a disparity calculation procedure in the image processing apparatus of the embodiment will be explained. Fig. 8 is a flowchart for explaining an example of an image processing procedure according to the embodiment. Fig. 8 shows a procedure in making a cross-check once using disparities calculated with the R image as the base image in a case of outputting disparities with the L image as the base image.

First, the control circuit 20 sets the R image as the base image for each circuit of the input image acquisition circuit 14, the disparity-based cost value calculation circuit 15, the cost optimization operation circuit 16, and the minimum-cost disparity extraction circuit 17 (S11). Normally, at first, disparities are calculated using as the base image an image opposite to an image for which disparities are to be outputted. Accordingly, in the above case, at first, disparities are calculated with the R image as the base image. Note that when it is desired to output disparities with the R image as the base image, the L image is set as the base image in S11.

Next, the control circuit 20 sets a scanning direction so that pixels are scanned in a direction from lower right to upper left for each circuit of the input image acquisition circuit 14, the disparity-based cost value calculation circuit 15, the cost optimization operation circuit 16, and the minimum-cost disparity extraction circuit 17 (S12).

Subsequently, the input image acquisition circuit 14, the disparity-based cost value calculation circuit 15, the cost optimization operation circuit 16, and the minimum-cost disparity extraction circuit 17 use the R image as the base image, and calculate disparities while the L image being the reference image is scanned in a direction from lower right to upper left (S13). Here, the cost optimization operation circuit 16 calculates costs only for calculable routes while pixels are scanned in a direction from lower right to upper left. That is, costs of four routes along vectors in four directions concentrating from a horizontal right direction, a vertical lower direction, a lower-right 45-degrees direction, and a lower-left 45- degrees direction are calculated, and the costs of the four routes are used to calculate a combined cost value S.

When a disparity which minimizes a combined cost value S has been extracted for all pixels of the base image and stored in the cross-check buffer 18, the control circuit 20 instructs swapping of the base image and swapping of the scanning direction of pixels. More specifically, at first, for each circuit of the input image acquisition circuit 14, the disparity-based cost value calculation circuit 15, the cost optimization operation circuit 16, and the minimum-cost disparity extraction circuit 17, the L image is set as the base image (S14). Simultaneously, a scanning direction is set so that pixels are scanned in a direction from upper left to lower right for each circuit of the input image acquisition circuit 14, the disparity-based cost value calculation circuit 15, the cost optimization operation circuit 16, and the minimum-cost disparity extraction circuit 17 (S15).

The input image acquisition circuit 14, the disparity-based cost value calculation circuit 15, the cost optimization operation circuit 16, and the minimum-cost disparity extraction circuit 17 use the L image as the base image, and calculate disparities while the R image that is the reference image is scanned in a direction from upper left to lower right (S16). Here, the cost optimization operation circuit 16 calculates costs only for calculable routes while pixels are scanned in a direction from upper left to lower right. That is, costs of four routes along vectors in four directions concentrating from a horizontal left direction, a vertical upper direction, an upper-right 45-degrees direction, and an upper-left 45-degrees direction are calculated, and the costs of the four routes are used to calculate a combined cost value S.

Subsequently, the disparity output circuit 19 checks a difference between a disparity of each pixel with the R image as the base image stored in the cross-check buffer 18 and a disparity of each pixel with the L image as the base image to check for each pixel whether a disparity has been calculated correctly or not (S17).

Finally, the disparity output circuit 19 reflects the check result in a disparity of each pixel with the L image as the base image, and for a pixel for which it is determined that a disparity has not been calculated correctly, the calculated disparity is replaced with a specific value (e.g., -1) for output. For a pixel for which it is determined that a disparity has been calculated correctly, the calculated disparity is outputted as it is. Note that a disparity and a check result may be outputted independently without replacing the disparity according to the check result.

Thus, according to the embodiment, in a case of calculating disparities using the SGM method (semi-global matching method) or the like and making a cross-check, in swapping the base image, an acquisition order of pixels in an image (scanning direction) is also swapped. Then, in each base image, costs are calculated only for routes corresponding to a scanning direction as routes for calculating a combined cost value S.

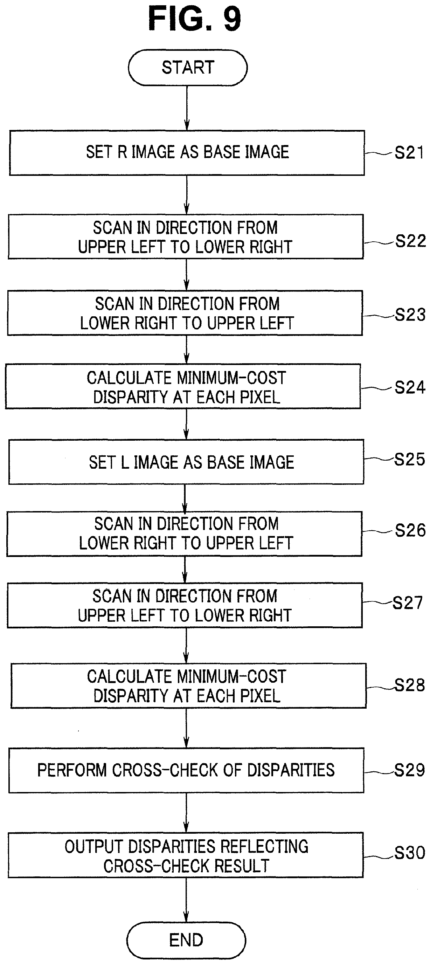

In a comparison example, as shown in Fig. 9, since two scans are performed in different directions per base image, a total of four scans need to be performed. Fig. 9 is a flowchart for explaining an example of an image processing procedure of the comparison example. That is, after the R image is set as the base image (S21), costs are calculated for calculable routes while pixels of the L image being the reference image are scanned in a direction from upper left to lower right (S22). The calculated costs are temporarily stored in a storage apparatus or the like. Subsequently, costs are calculated for calculable routes while pixels of the L image are scanned in a direction from lower right to upper left (S23). Then, in combination with the costs calculated and stored in S22, minimum-cost disparities of each image are calculated (S24).

Next, after the L image is set as the base image (S25), costs are calculated for calculable routes while pixels of the R image being the reference image are scanned in a direction from lower right to upper left (S26). The calculated costs are temporarily stored in a storage apparatus or the like. Subsequently, costs are calculated for calculable routes while pixels of the R image are scanned in a direction from upper left to lower right (S27). Then, in combination with the costs calculated and stored in S26, minimum-cost disparities of each image are calculated (S28). Finally, a cross-check is made between the disparities calculated in S24 and the disparities calculated in S28 (S29), and a check result is outputted (S30).

In contrast, in the embodiment, since one scan is enough per base image, the number of scans can be halved, so that a processing rate can be improved.

In the comparison example, since two scans are performed in different scanning direction per base image, costs in four directions calculated during the first raster scanning need to be temporarily stored in a storage apparatus or the like. In contrast, in the embodiment, by setting a scanning direction per base image to one direction, costs need not be temporarily stored in a storage apparatus, so that an amount of a mounted memory can be reduced.

Furthermore, in the embodiment, when one image is used as the base image, costs of routes concentrating from upper and right directions are calculated, and when the other image is used as the base image, costs of routes concentrating from lower and left directions are calculated. Accordingly, since costs of routes from all of upper, lower, left, and right directions are reflected in the cross-check, accuracy equivalent to the comparison example can be maintained.

Note that although only a case of making a cross-check is shown in the above description, a mode in which a cross-check is made and a mode in which a cross-check is not made may be selected based on an external input or the like. When the mode in which a cross-check is not made, it is desirable to remove a bias of directions regarding routes for calculating a combined cost value S. Accordingly, it is desirable for the control circuit 20 to instruct the cost optimization operation circuit 16 to perform two scans in different scanning directions, and acquire costs for eight routes along vectors in eight directions concentrating from, for example, a horizontal right direction, a horizontal left direction, a vertical upper direction, a vertical lower direction, an upper-right 45-degrees direction, a lower-right 45-degrees direction, a lower-left 45-degrees direction, and an upper-left 45-degrees direction.

The image processing apparatus 1 in the embodiment can be used as a driving support system in a moving object 100 or the like. Next, the moving object 100 on which the image processing apparatus 1 of the embodiment is mounted will be explained.

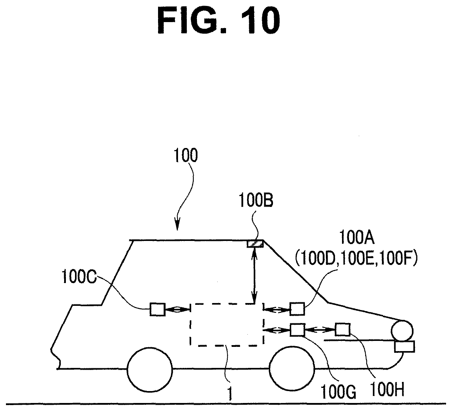

Fig. 10 is a diagram showing an example of the moving object 100 of the embodiment.

The moving object 100 includes the image processing apparatus 1, an output unit 100A, a sensor 100B, an input apparatus 100C, a power control unit 100G, and a power unit 100H.

The moving object 100 is a movable object. The moving object 100 is, for example, a vehicle (an automatic two-wheeled vehicle, an automatic four-wheeled vehicle, a bicycle), a bogie, a robot, a ship, or a flying object (an airplane, an unmanned aerial vehicle (UAV), or the like). The moving object 100 is, for example, a moving object which runs via human driving operations, or a moving object capable of automatically running (autonomously running) without human driving operations. A moving object capable of automatically running is, for example, an automatic driving vehicle. The moving object 100 of the embodiment will be explained using a case of a vehicle capable of autonomously running as an example.

Note that the image processing apparatus 1 as a driving support system is not limited to the form mounted on the moving object 100. The image processing apparatus 1 may be mounted on a stationary object. The stationary object is an immovable object, or an object in a stationary state with respect to the ground. The stationary object is, for example, a guardrail, a pole, a parked vehicle, a road sign, or the like. The image processing apparatus 1 may be mounted on a cloud server which executes processes on a cloud.

The output unit 100A outputs various pieces of information. For example, the output unit 100A outputs output information based on various processes.

The output unit 100A includes, for example, a communication function for transmitting output information, a display function for displaying output information, a sound output function for outputting sounds indicating output information, or the like. For example, the output unit 100A includes a communication unit 100D, a display 100E, and a speaker 100F.

The communication unit 100D communicates with an external apparatus. The communication unit 100D is a VICS (registered trademark) communication circuit, or a dynamic map communication circuit. The communication unit 100D transmits output information to an external apparatus. The communication unit 100D receives road information or the like from an external apparatus. The road information is a signal, a sign, a building in a periphery, a road width of each lane, a lane center line, or the like. The road information may be stored in a memory 1b such as a RAM or a ROM installed in the image processing apparatus, or may be stored in a memory installed separately in the moving object.

The display 100E displays output information. The display 100E is, for example, a well-known LCD (liquid crystal display), a projection apparatus, a light, or the like. The speaker 100F outputs sounds indicating output information.

The sensor 100B is a sensor configured to acquire a driving environment of the moving object 100. The driving environment is, for example, observed information of the moving object 100, or peripheral information of the moving object 100. The sensor 100B is, for example, an external sensor or an internal sensor.

The internal sensor is a sensor configured to observe observed information. The observed information includes, for example, acceleration of the moving object 100, velocity of the moving object 100, and angular velocity of the moving object 100.

The internal sensor is, for example, an inertial measurement unit (IMU), an acceleration sensor, a velocity sensor, a rotary encoder, or the like. The IMU observes observed information including triaxial acceleration and triaxial angular velocity of the moving object 100.

The external sensor observes peripheral information of the moving object 100. The external sensor may be mounted on the moving object 100, or may be mounted on outside of the moving object 100 (e.g., another moving object, an external apparatus, or the like).

The peripheral information is information indicating a peripheral situation of the moving object 100. A periphery of the moving object 100 is an area within a predetermined range from the moving object 100. The range is an observable range of the external sensor. The range should just be set in advance.

The peripheral information is, for example, a photographed image and distance information around the moving object 100. Note that the peripheral information may include position information of the moving object 100. The photographed image is photographed image data obtained by photographing (hereinafter, may be merely referred to as a photographed image). The distance information is information indicating a distance from the moving object 100 to a target. The target is a point observable by the external sensor in the outside world. The position information may be a relative position or an absolute position.

The external sensor is, for example, a photographing apparatus configured to obtain a photographed image by photographing, a distance sensor (a millimeter wave radar, a laser sensor, a distance image sensor), a position sensor (a GNSS (global navigation satellite system), a GPS (global positioning system), a wireless communication apparatus), or the like.

The photographed image is digital image data in which a pixel value is defined for each pixel, a depth map in which a distance from the sensor 100B is defined for each pixel, or the like. The laser sensor is, for example, a two-dimensional LIDAR (laser imaging detection and ranging) sensor installed in parallel to a horizontal plane, or a three-dimensional LIDAR sensor.

The input apparatus 100C receives various instructions or information inputs from a user. The input apparatus 100C is, for example, a pointing device such as a mouse or a trackball, or an input device such as a keyboard. The input apparatus 100C may be an input function on a touch panel installed integrally with the display 100E.

The power control unit 100G controls the power unit 100H. The power unit 100H is a device to be driven which is mounted on the moving object 100. The power unit 100H is, for example, an engine, a motor, a wheel, or the like.

The power unit 100H is driven under control of the power control unit 100G. For example, the power control unit 100G determines a peripheral situation based on output information generated by the image processing apparatus 1, information obtained from the sensor 100B, or the like to control an acceleration amount, a brake amount, a steering angle, or the like.

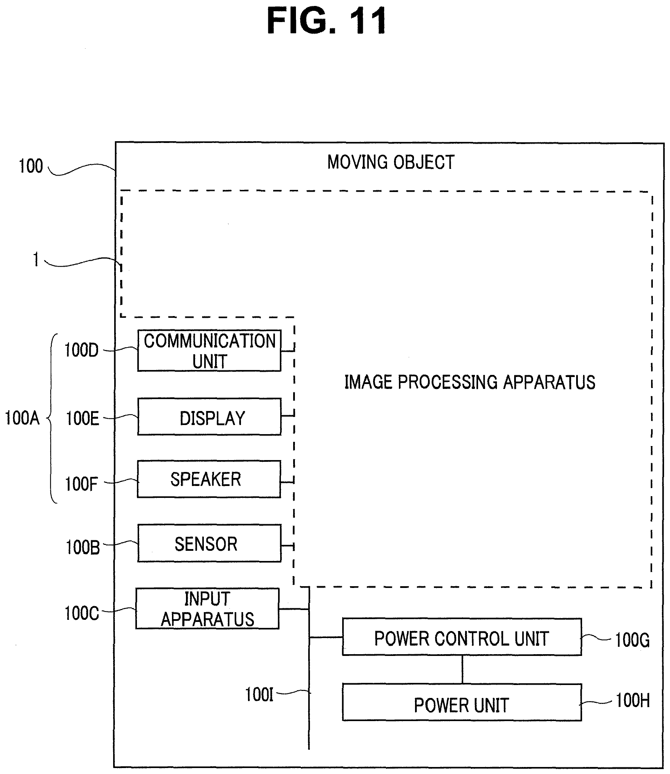

Next, an electrical configuration of the moving object 100 will be explained in detail. Fig. 11 is a block diagram showing an example of a configuration of the moving object 100.

The moving object 100 includes the image processing apparatus 1, the output unit 100A, the sensor 100B, the input apparatus 100C, the power control unit 100G, and the power unit 100H. The output unit 100A includes, as described above, the communication unit 100D, the display 100E, and the speaker 100F.

The image processing apparatus 1, the output unit 100A, the sensor 100B, the input apparatus 100C, and the power control unit 100G are connected to one another via a bus 1001. The power unit 100H is connected to the power control unit 100G.

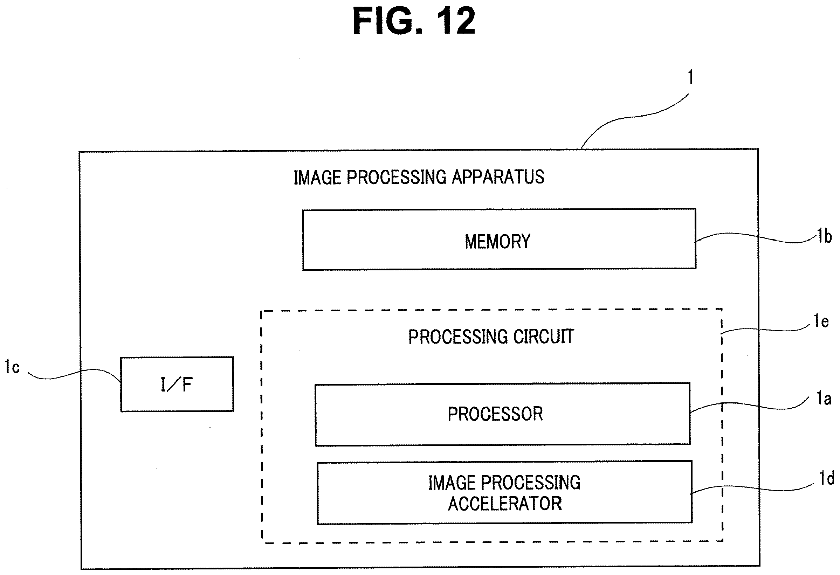

Fig. 12 is a block diagram showing an example of the image processing apparatus 1 mounted on the moving object 100. The image processing apparatus 1 includes an I/F 1c, the memory 1b, and the processor 1a. That is, the output unit 100A, the sensor 100B, the input apparatus 100C, the power control unit 100G, and the image processing apparatus 1 are connected to one another via the bus 1001.

Note that at least one of the output unit 100A (the communication unit 100D, the display 100E, and the speaker 100F), the sensor 100B, the input apparatus 100C, and the power control unit 100G should just be connected to the image processing apparatus 1 by wire or wirelessly. At least one of the output unit 100A (the communication unit 100D, the display 100E, and the speaker 100F), the sensor 100B, the input apparatus 100C, and the power control unit 100G may be connected to the image processing apparatus 1 via a network.

The I/F 1c is connected to a network (N/W) with another system, or the like. The I/F 1c controls transmission and reception of information with the communication unit 100D. Via the I/F 1c, information on a recognized target such as a human being, or information on a distance to the recognized target.

The memory 1b stores various data. The memory 1b is, for example, a RAM (random access memory), a semiconductor memory device such as a flash memory, a hard disk, and an optical disc. Note that the memory 1b may be installed outside the image processing apparatus 1. The ROM holds a program executed by the processor 1 a or necessary data. The RAM functions as a working area of the processor 1a. The memory 1b may be installed outside the moving object 100. For example, the memory 1b may be arranged in a server apparatus installed on a cloud.

The memory 1b may be a storage medium. More specifically, the storage medium may be one in which programs or various pieces of information are downloaded through a LAN (local area network) or the Internet and stored or temporarily stored. The memory 1b may be composed of a plurality of storage media.

Each processing function in the processor 1a is stored in the memory 1b in a form of a program executable by a computer. The processor 1a is a processor which reads out a program from the memory 1b for execution to realize a functional unit corresponding to each program.

Note that a plurality of independent processors for realizing respective functions may be combined to compose a processing circuit 1e. Then, each function is realized by each processor executing a program. A case is possible in which each processing function is composed as a program and one processing circuit 1e executes each program, and a case is possible in which an image processing accelerator 1d is installed as a dedicated circuit and a specific function is implemented in an independent program execution circuit.

The processor 1a implements a function by reading out and executing a program stored in the memory 1b. Note that a configuration is possible in which the program is directly embedded in a circuit of the processor instead of storing the program in the memory 1b. Then, the processor implements the function by reading out and executing the program embedded in the circuit.

In the moving object 100 thus configured, even in a case of using a photographed image being peripheral information observed by the sensor 100B and using the global matching to calculate disparities and make a cross-check, a processing rate can be improved and a memory usage can be reduced while accuracy equivalent to the comparison example is maintained by using the image processing method as described above.

Each "circuit" in the present specification is a conceptual one corresponding to each function of an embodiment, and does not necessarily correspond one to one to specific hardware or a software routine. Accordingly, the present specification has been explained by assuming virtual circuit blocks (circuits) having respective functions of an embodiment.

While certain embodiments have been described, these embodiments have been presented by way of example only, and are not intended to limit the scope of the inventions. Indeed, the novel devices and systems described herein may be embodied in a variety of other forms; furthermore, various omissions, substitutions and changes in the form of the devices and systems described herein may be made without departing from the spirit of the inventions. The accompanying claims and their equivalents are intended to cover such forms or modifications as would fall within the scope and spirit of the inventions.

**Claims**

1. An image processing apparatus for calculating a disparity based on a first image obtained by first image pickup means picking up an image of a subject, and a second image obtained by second image pickup means positioned differently from the first image pickup means picking up an image of the subject, the image processing apparatus comprising:

   a control circuit configured to set any one of the first image and the second image as a base image and another as a reference image, and to set an acquisition order and an operation order of pixels in the reference image to a first direction;
   a cost optimization operation circuit configured to perform a cost optimization operation based on global optimization using a calculable route while pixels are acquired in the acquisition order and operation order set by the control circuit in the reference image;
   a minimum-cost disparity extraction circuit configured to determine a disparity of each pixel using a cost value obtained by the cost optimization operation; and
   a disparity output circuit configured to make a cross-check using a first disparity calculated with the first image as the base image, and a second disparity calculated with the second image as the base image to determine and output validity of the calculated disparities for each pixel,
   wherein the control circuit swaps the base image and the reference image, and simultaneously sets a second direction that is an acquisition order and operation order of pixels in the reference image after the swapping to a reverse direction of the first direction.

2. The image processing apparatus according to claim 1, wherein
   the cost optimization operation is performed by calculating a combined cost value based on an SGM method.

3. The image processing apparatus according to claim 2, wherein
   the acquisition order and operation order of pixels is raster scanning, the first direction is a direction from lower right to upper left in an image, and the second direction is a direction from upper left to lower right in an image.

4. The image processing apparatus according to claim 3, wherein
   the disparity output circuit rearranges and outputs disparities in a pixel order along the second direction.

5. The image processing apparatus according to claim 4, wherein
   the first image is an R image, the second image is an L image, and the first disparity is calculated before the second disparity.

6. The image processing apparatus according to claim 1, wherein
   the acquisition order of pixels is raster scanning, the first direction is a direction from lower right to upper left in an image, and the second direction is a direction from upper left to lower right in an image.

7. The image processing apparatus according to claim 6, wherein
   the disparity output circuit rearranges and outputs disparities in a pixel order along the second direction.

**8.** The image processing apparatus according to claim 7, wherein
the first image is an R image, the second image is an L image, and the first disparity is calculated before the second disparity.

**9.** The image processing apparatus according to claim 1, wherein
the operation order of pixels is raster scanning, the first direction is a direction from lower right to upper left in an image, and the second direction is a direction from upper left to lower right in an image.

**10.** The image processing apparatus according to claim 9, wherein
the disparity output circuit rearranges and outputs disparities in a pixel order along the second direction.

**11.** The image processing apparatus according to claim 10, wherein
the first image is an R image, the second image is an L image, and the first disparity is calculated before the second disparity.

**12.** An image processing method comprising:

setting as a base image a first image obtained by first image pickup means picking up an image of a subject, and setting as a reference image a second image obtained by second image pickup means picking up an image of the subject;
setting an acquisition order and an operation order of pixels in the reference image to a first direction;
determining a disparity of each pixel by performing a cost optimization operation based on global optimization using a calculable route while pixels are acquired in the first direction in the second image that is the reference image;
swapping the base image and the reference image to set the first image as the reference image and the second image as the base image, and simultaneously setting the acquisition order and operation order of pixels in the reference image to a second direction that is a reverse direction of the first direction;
determining a disparity of each pixel by performing a cost optimization operation based on global optimization using a calculable route while pixels are acquired in the second direction in the first image that is the reference image; and
making a cross-check using a first disparity calculated with the first image as the base image, and a second disparity calculated with the second image as the base image to determine and output validity of the calculated disparities for each pixel.

**13.** The image processing method according to claim 12, wherein
the cost optimization operation is performed by calculating a combined cost value based on an SGM method.

**14.** The image processing method according to claim 13, wherein
the acquisition order and operation order of pixels is raster scanning, the first direction is a direction from lower right to upper left in an image, and the second direction is a direction from upper left to lower right in an image.

**15.** The image processing method according to claim 14, wherein
disparities are rearranged and output in a pixel order along the second direction.

# FIG. 1

# FIG. 2

L IMAGE → INPUT IMAGE ACQUISITION CIRCUIT (14) → DISPARITY-BASED COST VALUE CALCULATION CIRCUIT (15) → COST OPTIMIZATION OPERATION CIRCUIT (16) → MINIMUM-COST DISPARITY EXTRACTION CIRCUIT (17) → CROSS-CHECK BUFFER (18) → DISPARITY OUTPUT CIRCUIT (19) →

R IMAGE → INPUT IMAGE ACQUISITION CIRCUIT (14)

CONTROL CIRCUIT (20)

DISTANCE INFORMATION OPERATION CIRCUIT (11)

EP 3 540 693 A1

# FIG. 3

# FIG. 4

```
                        ┌──────────────┐
                        │    START     │
                        └──────┬───────┘
                               │
        ┌──────────────────────▼──────────────────────┐
        │  SET MAXIMUM NUMBER OF DISPARITIES (Dnum)    │──S1
        └──────────────────────┬──────────────────────┘
                               │
        ┌──────────────────────▼──────────────────────┐
        │  INITIALIZE SEARCH PIXEL POSITION (D) D=0    │──S2
        └──────────────────────┬──────────────────────┘
                               │
        ┌──────────────────────▼──────────────────────┐
        │         CALCULATE COST VALUE AT             │──S3
        │         SEARCH PIXEL POSITION               │
        └──────────────────────┬──────────────────────┘
                               │
        ┌──────────────────────▼──────────────────────┐
        │   SET TO NEXT SEARCH PIXEL POSITION D++     │──S4
        └──────────────────────┬──────────────────────┘
                               │
                   No   ◇──────▼──────◇
              ◄────────    D=Dnum?       ──S5
                        ◇─────────────◇
                               │ Yes
                        ┌──────▼───────┐
                        │     END      │
                        └──────────────┘
```

FIG. 5B

FIG. 5A

# FIG. 6

(COST VALUE) → **UPDATED COST VALUE OPERATION CIRCUIT** (161)

162

(PENALTY CONSTANT)

COST OPTIMIZATION OPERATION CIRCUIT

16

EP 3 540 693 A1

# FIG. 7

EP 3 540 693 A1

L IMAGE 6l

R IMAGE 6r

0          100          X

0          85  100          X

25

25

Y

Y

DISPARITY = 15

DISPARITY = 16

# FIG. 8

START

SET R IMAGE AS BASE IMAGE — S11

SET SCANNING DIRECTION TO DIRECTION FROM LOWER RIGHT TO UPPER LEFT — S12

CALCULATE MINIMUM-COST DISPARITY AT EACH PIXEL — S13

SET L IMAGE AS BASE IMAGE — S14

SET SCANNING DIRECTION TO DIRECTION FROM UPPER LEFT TO LOWER RIGHT — S15

CALCULATE MINIMUM-COST DISPARITY AT EACH PIXEL — S16

PERFORM CROSS-CHECK OF DISPARITIES — S17

OUTPUT DISPARITIES REFLECTING CROSS-CHECK RESULT — S18

END

# FIG. 9

START

SET R IMAGE AS BASE IMAGE — S21

SCAN IN DIRECTION FROM
UPPER LEFT TO LOWER RIGHT — S22

SCAN IN DIRECTION FROM
LOWER RIGHT TO UPPER LEFT — S23

CALCULATE MINIMUM-COST
DISPARITY AT EACH PIXEL — S24

SET L IMAGE AS BASE IMAGE — S25

SCAN IN DIRECTION FROM
LOWER RIGHT TO UPPER LEFT — S26

SCAN IN DIRECTION FROM
UPPER LEFT TO LOWER RIGHT — S27

CALCULATE MINIMUM-COST
DISPARITY AT EACH PIXEL — S28

PERFORM CROSS-CHECK OF DISPARITIES — S29

OUTPUT DISPARITIES REFLECTING
CROSS-CHECK RESULT — S30

END

# FIG. 10

# FIG. 11

100 ⟋

1 ⟋

MOVING OBJECT

100D — COMMUNICATION UNIT

100A {

100E — DISPLAY

100F — SPEAKER

IMAGE PROCESSING APPARATUS

100B — SENSOR

100C — INPUT APPARATUS

100I ⟋

POWER CONTROL UNIT ⟋ 100G

POWER UNIT ⟋ 100H

# FIG. 12

IMAGE PROCESSING APPARATUS
— 1

MEMORY
— 1b

PROCESSING CIRCUIT
— 1e

I/F
— 1c

PROCESSOR
— 1a

IMAGE PROCESSING
ACCELERATOR
— 1d

EP 3 540 693 A1

Europäisches
Patentamt

European
Patent Office

Office européen
des brevets

# EUROPEAN SEARCH REPORT

Application Number

EP 18 19 2665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEIKO HIRSCHMULLER: "Stereo Processing by Semiglobal Matching and Mutual Information", IEEE TRANSACTIONS ON PATTERN ANALYSIS AND MACHINE INTELLIGENCE, IEEE COMPUTER SOCIETY, USA, vol. 30, no. 2, 1 February 2008 (2008-02-01), pages 328-341, XP011195575, ISSN: 0162-8828, DOI: 10.1109/TPAMI.2007.1166 * sections 2.1, 2.2, and 2.3; figure 3 * | 1-15 | INV. G06T7/593 |
| X | US 2017/163960 A1 (NAGATA AKIHIKO [JP] ET AL) 8 June 2017 (2017-06-08) * paragraphs [0010] - [0012]; figures 1,4-11 * | 1-15 | |
| A | US 2017/069072 A1 (SANO TORU [JP]) 9 March 2017 (2017-03-09) * abstract * | 1-15 | |

TECHNICAL FIELDS
SEARCHED (IPC)

G06T

The present search report has been drawn up for all claims

| Place of search | Date of completion of the search | Examiner |
|---|---|---|
| Munich | 14 February 2019 | Krawczyk, Grzegorz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 18 19 2665

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2019

| Patent document cited in search report | | Publication date | Patent family member(s) | | Publication date |
|---|---|---|---|---|---|
| US 2017163960 | A1 | 08-06-2017 | JP | 6377970 B2 | 22-08-2018 |
| | | | JP | 2016001841 A | 07-01-2016 |
| | | | US | 2017163960 A1 | 08-06-2017 |
| | | | WO | 2015190327 A1 | 17-12-2015 |
| US 2017069072 | A1 | 09-03-2017 | NONE | | |

EPO FORM P0459

For more details about this annex : see Official Journal of the European Patent Office, No. 12/82